## Europäisches Patentamt

## European Patent Office

## Office européen des brevets

(19)

(11) Numéro de publication: **0 220 099 B1**

(12) **FASCICULE DE BREVET EUROPEEN**

(45) Date de publication du fascicule du brevet:
07.02.90

(51) Int. Cl.⁴: **G01N 23/222**

(21) Numéro de dépôt: 86402114.2

(22) Date de dépôt: 26.09.86

(54) Dispositif de détection de matière fissile.

(30) Priorité: 02.10.85 FR 8514623

(43) Date de publication de la demande:
29.04.87 Bulletin 87/18

(45) Mention de la délivrance du brevet:
07.02.90 Bulletin 90/6

(84) Etats contractants désignés:
BE DE GB IT LU NL

(56) Documents cités:
US-A- 3 018 374
US-A- 3 707 631
US-A- 3 736 429
US-A- 4 266 132

NUCLEAR INSTRUMENTS AND METHODS,
vol. 141, mars 1977, pages 299-306, North-Holland
Publishing Co., Amsterdam, NL; "Assay of fissile
materials by a cyclic method of neutron activation and
delayed-neutron counting"
KERNTECHNIK,
vol. 15, no. 12, décembre 1973, pages 548-553; J.
REMOVILLE et al.: "Zerstörungsfreie Untersuchung
des Brennelementbündels eines
Schnellbrüterreaktors"

(73) Titulaire: **COMMISSARIAT A L'ENERGIE ATOMIQUE,
31/33, rue de la Fédération, F-75015 Paris(FR)**

(72) Inventeur: **Grenier, Gérard, 33, Avenue Charles
Emmanuel, F-94450 Limeil-Brevannes(FR)**

(74) Mandataire: **Mongrédien, André et al, c/o
BREVATOME 25, rue de Ponthieu, F-75008 Paris(FR)**

## Description

La présente invention a pour objet un dispositif de détection de matière fissile. L'état de le technique est montré dans les documents: US-A 3 018 374, US-A 4 266 132 et Nuclear Instruments and Methods, vol 141, mars 1977, pages 299–306.

Pour contrôler la présence de matière fissile, notamment dans des déchets nucléaires, on sait qu'il est possible d'utiliser des neutrons thermiques produits à partir d'une source associée à des moyens de thermalisation, ces neutrons thermiques étant aptes à produire, dans la matière à contrôler, des neutrons de fission, si celle-ci contient de la matière fissile. La détection de cette dernière revient alors à la détection de neutrons de fission.

La présente invention a pour objet un dispositif qui met en oeuvre ce procédé. L'originalité de l'invention tient dans la simplicité des moyens mis en oeuvre, simplicité qui conduit à une mise en oeuvre aisée du dispositif.

De manière précise, le dispositif de l'invention est caractérisé par le fait qu'il comprend deux panneaux parallélépipédiques posés sur un support et formant un dièdre d'ouverture réglable, ce dièdre ayant une arête centrée sur une source de neutrons, ces panneaux étant constitués par des modules pleins réalisés en une matière apte à thermaliser les neutrons et par un module de même matière dans lequel est logé un bloc de détection de neutrons de fission, ce bloc de détection étant situé à l'extrémité opposée à la source de neutrons.

De cette manière, on obtient un dispositif léger et de faible encombrement et qui est donc aisément transportable et adaptable aux produits à contrôler.

De toute façon, les caractéristiques de l'invention apparaîtront mieux à la lumière de la description qui va suivre, d'un exemple de réalisation donné à suivre, d'un exemple de réalisation donné à titre explicatif et nullement limitatif. Cette description se réfère à des dessins annexés, sur lesquels :

- la figure 1 montre schématiquement le dispositif de l'invention,
- la figure 2 montre la répartition dans le temps des événements détectés avec et sans matière fissile.

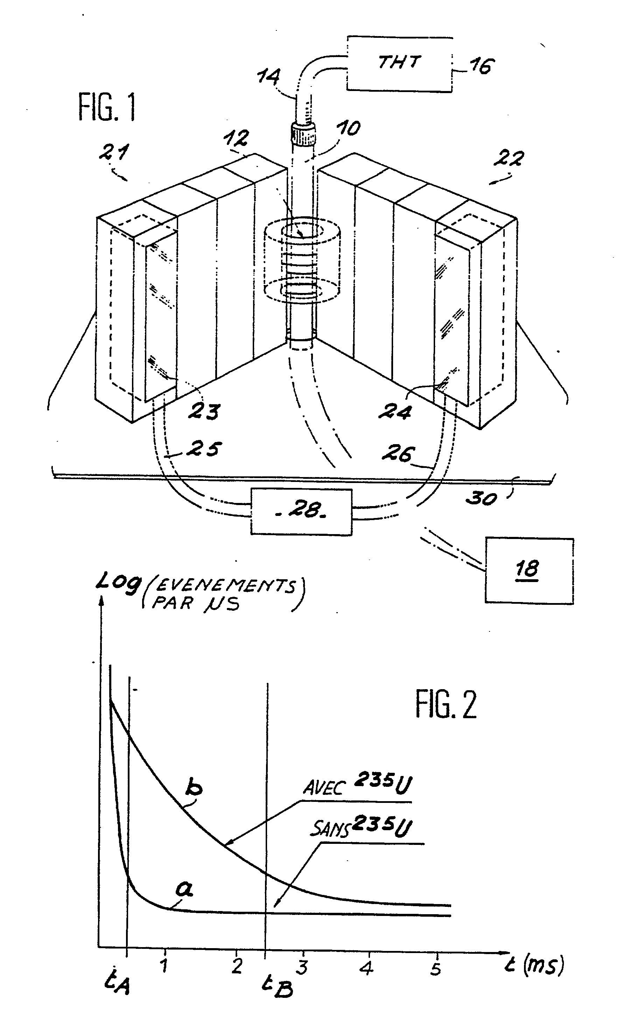

Le dispositif représenté sur la figure 1 comprend un générateur de neutrons pulsé 10 de 14 MeV, entouré d'un bloc convertisseur en plomb 12. Ce générateur, qui est d'un type connu, est constitué d'une enveloppe cylindrique allongée à l'intérieur de laquelle se trouve une cible de titane tritié. L'ensemble forme, dans un mode particulier de réalisation, un cylindre de 7 cm de diamètre et de 74 cm de longueur. Ce générateur est relié d'un côté par un câble 14 à une alimentation à très haute tension 16, de l'autre par un câble 17 à un coffret électronique 18. Les câbles peuvent avoir plus d'une dizaine de mètres. L'ensemble peut être commandé à distance.

Le convertisseur 12 est un cylindre de plomb d'environ 15 cm de hauteur et de 5 cm d'épaisseur. Il est placé autour du générateur cylindrique au niveau de la cible produisant les neutrons.

L'ensemble générateur-convertisseur est disposé sur l'arête du dièdre formé par deux panneaux 21 et 22. Ces panneaux sont constitués chacun, dans la variante illustrée, de quatre modules de polyéthylène. Trois modules sont pleins. Le quatrième est évidé et permet de loger un bloc de détection, respectivement 23 et 24. Ces blocs sont constitués chacun par trois compteurs à $^3$He (du type 65NH45) entourés de cadmium et de $B_4C$. Ces six compteurs sont reliés par des câbles 25 et 26 à un circuit électronique 28.

Les panneaux 21 et 22 reposent sur un support 30 et ils forment un angle quelconque, réglable, par exemple de 120°. L'objet à contrôler est placé entre les deux panneaux, à proximité des blocs de détection. Plus l'angle formé par les panneaux est faible, meilleure est la sensibilité.

La figure 2 permet de comprendre le principe de la détection d'élément fissile. Les courbes représentent les variations dans le temps, porté en abscisses, du nombre d'événements détectés pendant un certain intervalle de temps (par exemple 10 µs). Ce nombre est porté en ordonnées, en échelle logarithmique. S'il n'y a pas d'élément fissile dans la matière contrôlée, le nombre d'événements détectés par les blocs 23 et 24 décroît très rapidement après l'instant correspondant à l'émission de la bouffée de neutrons par le générateur (instant pris comme origine des temps). L'évolution est représentée par la courbe a. Après un temps $t_A$, les neutrons ralentis par le polyéthylène se retrouvent avec une énergie inférieure au seuil de détection.

Lorsqu'une matière fissile comme $^{235}$U est présente dans la matière contrôlée, l'évolution est différente : les neutrons thermiques présents après l'instant $t_A$ peuvent produire des neutrons de fission prompts, qui sont détectés par les blocs de détection. D'où une courbe b qui diffère sensiblement de la courbe a. On définit alors un intervalle de comptage compris entre des instants $t_A$ et $t_B$. Cet intervalle est de quelques millisecondes (par exemple 2). Le résultat du comptage dans cet intervalle est soit faible (pas de matière fissile), soit fort (présence de matière fissile). C'est le rôle du circuit 28 d'effectuer ce comptage. Il comprend pour cela un préamplificateur, un amplificateur et un discriminateur délivrant des impulsions logiques. Un monostable de durée $t_A$ commandé par l'émission de neutrons ouvre une porte de comptage à l'instant $t_A$ qui suit l'émission de la bouffée de neutrons. Un monostable de durée $t_B$ ferme cette porte. Entre ces deux instants, on comptabilise les événements détectés.

On peut aussi utiliser un analyseur multicanaux fonctionnant en multiéchelle.

## Revendications

1. Dispositif de détection de matière fissile, comprenant une source de neutrons (10) entourée d'un bloc convertisseur (12), des moyens pour thermaliser les neutrons émis par cette source en neutrons thermiques aptes à interagir avec un objet à contrôler pour lui faire émettre des neutrons de fission dans le cas où il contient de la matière fissile, et un ensemble de détection insensible aux neutrons thermiques mais sensible aux neutrons de fission et disposé à proximité de la zone où est situé l'objet à contrôler, ce dispositif étant caractérisé par le fait qu'il comprend deux panneaux parallélépipédiques (21, 22) posés sur un support (30) et formant un dièdre d'ouverture réglable, ce dièdre ayant une arête centrée sur la source de neutrons (10), ces panneaux étant constitués par des modules pleins réalisés en une matière apte à thermaliser les neutrons et par un module de même matière dans lequel est logé un bloc de détection de neutrons de fission (23, 24), ce bloc de détection étant situé à l'extrémité opposée à la source de neutrons (10), l'objet à contrôler étant placé entre les deux panneaux (21, 22).

2. Dispositif selon la revendication 1, caractérisé par le fait que les modules des panneaux sont en polyéthylène.

3. Dispositif selon la revendication 1, caractérisé par le fait que chaque bloc de détection (23, 24) des neutrons de fission est constitué de compteurs à $^3$He.

## Claims

1. Device for detecting fissionable material, comprising a neutron source (10) surrounded by a converter unit (12), means for thermalizing the neutrons emitted by this source of thermal neutrons able to interact with an object to be checked to cause it to emit fission neutrons in case it contains fissionable material, and a detection assembly insensitive to thermal neutrons but sensitive to fission neutrons and placed in the vicinity of the zone where the object to be checked is located, this device being characterized by the fact that it comprises two parallelepipedal panels (21, 22) placed on a support (30) and forming a dihedral with an adjustable opening, this dihedral having an edge centered on the neutron source (10), these panels consisting of solid modules made of a material able to thermalize the neutrons and of a module of the same material in which a unit (23, 24) for detecting fission neutrons is housed, this detection unit being located at the end opposite the neutron source (10), the object to be checked being placed between the two panels (21, 22).

2. Device according to claim 1, wherein the modules of the panels are of polyethylene.

3. Device according to claim 1, wherein each unit (23, 24) for detecting fission neutrons consists of $^3$He counters.

## Patentansprüche

1. Vorrichtung zum Nachweis von Spaltmaterial mit einer Neutronenquelle (10), die von einem Umwandlerblock (12) umgeben ist mit einer Vorrichtung, um die von dieser Quelle emittierte Neutronen in thermische Neutronen in thermische Neutronen zu thermalisieren, die geeignet sind, mit einem zu kontrollierenden Objekt wechselzuwirken, um es Spaltneutronen emittieren zu lassen, sofern es Spaltmaterial enthält, und mit einer Nachweisanordnung, die gegenüber thermischen Neutronen unempfindlich gegenüber Spaltneutronen jedoch empfindlich ist und die in der Nähe der Zone, wo sich das zu kontrollierende Objekt befindet, angeordnet ist, wobei die Vorrichtung gekennzeichnet ist durch die Tatsache, daß sie zwei Wände (21, 22) in Form von Parallelepipeden aufweist, die auf einem Träger (30) stehen und ein Zweiflach mit einer regulierbaren Öffnung bilden, wobei dieses Zweiflach einen auf die Neutronenquelle (10) zentrierten Anschlag besitzt, wobei diese Wände aus Modulen, die vollständig aus einem Material sind, das geeignet ist, die Neutronen zu thermalisieren, und aus einem Modul desselben Materials, in welchem ein Block (23, 24) zum Nachweis von Spaltneutronen angeordnet ist, bestehen, wobei dieser Nachweisblock sich an dem der Neutronenquelle (10) am weitesten entfernt liegenden Ende befindet und wobei sich das zu kontrollierende Objekt zwischen den beiden Wänden befindet.

2. Vorrichtung nach Anspruch 1, gekennzeichnet durch die Tatsache, daß die Module der Wände aus Polyäthylen bestehen.

3. Vorrichtung nach Anspruch 1, gekennzeichnet durch die Tatsache, daß jeder Block (23, 24) zum Nachweis von Spaltneutronen aus $^3$He-Zählern besteht.

FIG. 1

THT 16
14
21 12 10 22
23 24
25 26
.28. 30
18

FIG. 2

Log (EVENEMENTS)
(PAR μS)

b

AVEC $^{235}U$

SANS $^{235}U$

a

$t_A$ 1 2 $t_B$ 3 4 5 $t$ (ms)